# EUROPEAN PATENT APPLICATION

(11) **EP 1 306 817 A1**
(43) Date of publication of application: **02.05.2003**
(21) Application number: 02024129.5
(22) Date of filing: 29.10.2002
(51) Int. Cl.: G07C 9/00, E05B 47/00, B60R 25/00, H04B 1/16, H01L 41/113

(54) **Self-power generation type transmitter**

(30) Priority: 29.10.2001 JP 2001331634
(71) Applicant: USC Co., Ltd., Tokyo (JP); Jigyo Souzou Kenkyujyo Co., Limited, Tokyo (JP)
(72) Inventor: Sakai, Yasuhiro, Tokyo (JP)
(74) Representative: Strehl Schübel-Hopf & Partner

(57) **Abstract**

In a self-power generation type transmitter, piezoelectric elements (**21**) are used as a power source for transmission and generated power is efficiently utilised so that the transmission of a signal requiring a relatively high electric power can be performed. The self-power generation type transmitter includes a power generating part (**2**) for generating electric power by applying distortion to the piezoelectric elements (**21**), a charging part (**3**) for repeatedly charging generated power, and a transmitting part (**4**) for transmitting a signal by the charged power. When the charged power reaches a level at which the signal can be transmitted, the electric power is supplied to the transmitting part (**4**) from the charging part (**3**).

## Description

### Background of the Invention

The present invention relates to a transmitter using piezoelectric elements as a power source.

### Prior Art

A piezoelectric effect for converting the mechanical energy and electrical energy of a piezoelectric material has been hitherto well-known. A technique that the piezoelectric material is changed to an element to make use of the piezoelectric material and the element is employed as a piezoelectric element has been developed. In the present condition, although various kinds of materials such as ceramic materials have been examined and promoted to be put to practical use as the piezoelectric elements, a sufficient quantity of power generation cannot be obtained.

As a technique that this piezoelectric element is employed as a power source of a transmitter, a "transmitter" is disclosed in Japanese patent application Laid-Open No. hei 5-037404 in which a transmitter using a piezoelectric element as well as a primary battery as a power source is proposed. In the publication, is disclosed the technique of the transmitter applied to a wireless door lock device of a motor vehicle in which a door is automatically locked or unlocked without inserting a key into a keyhole by operating a button or the like provided in the key upon getting on or getting off the motor vehicle. This transmitter ordinarily employs the primary battery as the power source, however, when the primary battery is run out, the piezoelectric element provided as a spare is allowed to generate power to compensate for an inconvenience due to the exhaustion of the battery until the battery is replaced by another battery.

Since the door of the motor vehicle disclosed in the above-described publication is operated immediately before getting on the vehicle or immediately after getting off the vehicle, a signal transmitted from the transmitter is supplied to a receiver provided in the motor vehicle from a relatively near position. That is, in this publication, the transmission that can reach the receiver with a relatively low electric power is presented. Therefore, in the transmitter using the piezoelectric element, in the case of a transmission requiring a relatively high electric power, it has been a problem how the transmitter is constructed.

Further, since a circuit disclosed in the publication does not judge with what quantity of power a capacitor is charged, the circuit is adapted to consume an electric power while it does not recognise whether or not the electric power sufficient for transmission is obtained. Accordingly, under the present condition, since an amount of power generation of the piezoelectric element for one time is small, it is necessary to do an artificial action such as terribly shaking a key for a short time immediately before the transmission. Then, when the amount of power generation is insufficient and the transmission is impossible, an action such as more terribly shaking the key is required. When a user operates the key and decides a transmission state, such actions can be performed. However, in the case of the transmitter which a user does not necessarily operate the key, it has been a problem in what manner the transmitter is constructed.

The use of the piezoelectric element as the power source of the transmitter has been expected as a self-power generation type power source in which a charging operation or an exchanging operation is not necessary. Further, it is demanded to make possible a transmission for communication from a remote place, a transmission requiring a relatively high electric power, or a transmission using a natural force except the artificial action. Therefore, a further improvement has been demanded from the viewpoint that the power generation of the piezoelectric element is efficiently utilised for transmission.

### Summary of the Invention

With the above problems taken into consideration, it is an object of the present invention to provide a self-power generation type transmitter in which piezoelectric elements are used as a power source for transmission and generated power is efficiently employed to transmit a signal requiring a relatively high electric power.

In order to solve the above-described problems, a self-power generation type transmitter of the present invention utilises means as described below.

That is, the self-power generation type transmitter defined in claim 1 comprises a power generating part for generating power by applying distortion to piezoelectric elements, a charging part for repeatedly charging generated power and a transmitting part for transmitting a signal by the charged power, in which when an amount of charged power reaches a level at which the signal can be transmitted, the electric power is supplied to the transmitting part from the charging part.

In this device, since the distortion is generated in the piezoelectric element so that the electric power is generated and the charging part is successively charged with the electric power every time the electric power is generated, the amount of charged power in the charging part is increased and stored every time the power generation is repeated. Then, when the amount of charge power stored in the charging part reaches a level at which the signal can be transmitted, the electric power is supplied to the transmitting part. In this case, the signal to be transmitted is a signal transmitted either in air or water or both of them.

Further, according to claim 2, in the self-power generation type transmitter defined in claim 1, the charging part is provided with deciding means for deciding whether or not the amount of charged power reaches the level at which the signal can be transmitted.

In this device, the deciding means is provided so that the electric power is supplied to the transmitting part only when it is decided that the electric power is charged to a level at which the signal can be transmitted.

According to claim 3, in the self-power generation type transmitter defined in claim 2, the deciding means of the charging part decides the amount of charged electric power in accordance with a timing of the power generation of the piezoelectric element.

In this device, since the deciding means decides the amount of charged electric power at a timing which the amount of charged electric power increases due to the power generation of the piezoelectric elements, a wasteful consumption of electric power for decision is reduced.

Further, according to claim 4, in the self-power generation type transmitter defined in claim 2 or 3, the charging part includes discharge switching means for starting a discharging operation when it is decided that the amount of charged power is located at the level which the signal can be transmitted, and stopping a discharging operation when the transmitting part completes the transmission of the signal.

In this device, since the discharge switching means is provided so that the amount of charged power increasing stepwise every time of the power generation of the piezoelectric element is stored without being discharged until the deciding means decides that the amount of charged power reaches a level at which the signal can be transmitted. Further, since the discharge switching means is provided so that when the transmission of the signal is completed and the electric power is not required in the transmitting part, the discharging operation is stopped. Accordingly, the amount of charged power of the charging part is prevented from being wastefully used.

Further, according to claim 5, in the self-power generation type transmitter defined in any one of claims 2 to 4, the power generating part includes the piezoelectric elements and a colliding member which collides with the piezoelectric elements, and the deciding means decides the amount of charged power in accordance with a timing at which the colliding member collides with the piezoelectric elements to generate the power.

In this device, the colliding member collides with the piezoelectric elements to distort the piezoelectric elements and generate electric power, so that the amount of charged power is increased substantially stepwise. Then, the amount of charged power is decided in accordance with a timing of collision of the colliding member, that is, a timing at which the amount of charged power is increased.

Further, according to claim 6, in the self-power generation type transmitter defined in any one of claims 1 to 5, the transmitting part does not transmit a signal until the transmitting part receives an instruction for transmitting a signal after the electric power is supplied to the transmitting part from the charging part.

In this device, the electric power is supplied to the transmitting part from the charging part to bring the transmitting part to a state in which the transmitting part can transmit a signal at any time, and the transmitting part sends a signal when it receives an instruction for transmission. Thus, a timing of transmitting a signal may be controlled based on requirements except the electric power.

### Brief Description of the Drawings

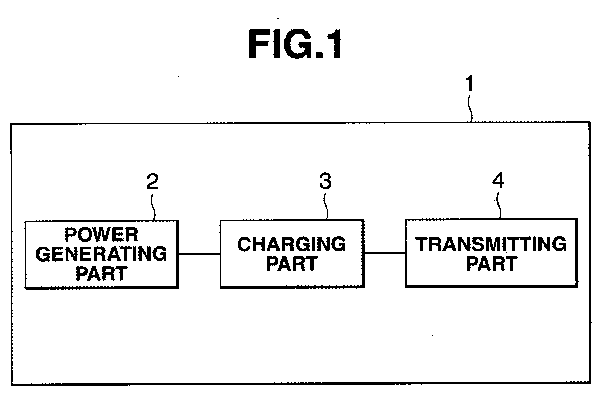

- Fig. 1: is a block diagram of an embodiment (1).

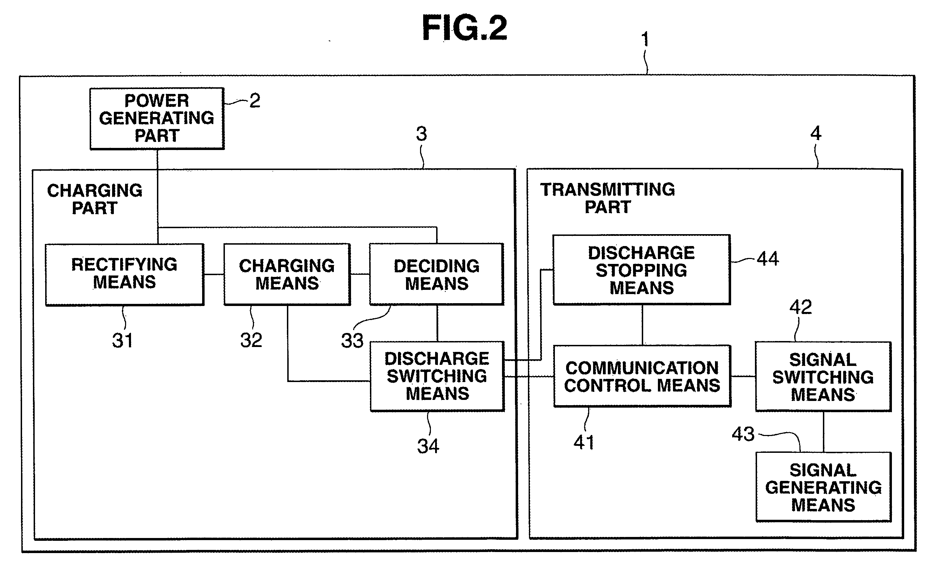

- Fig. 2: is a detailed block diagram of the embodiment (1).
- Figs. 3: and 4 together show a circuit diagram of the embodiment (1).
- Fig. 5: is a sectional view of a power generating part of the embodiment (1).

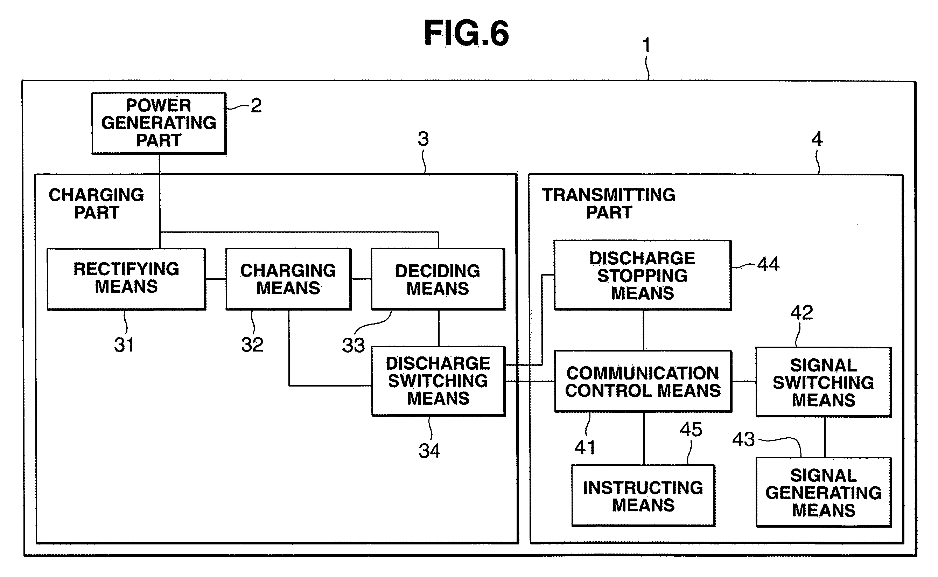

- Fig. 6: is a detailed block diagram of an embodiment (2).

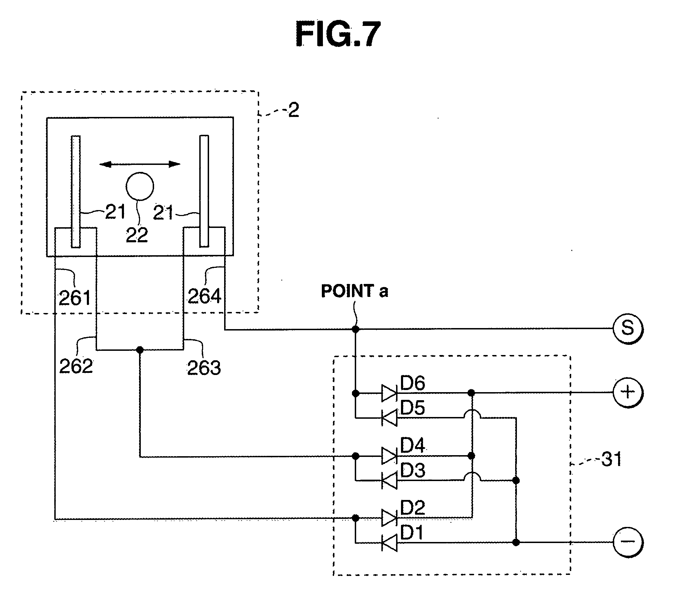

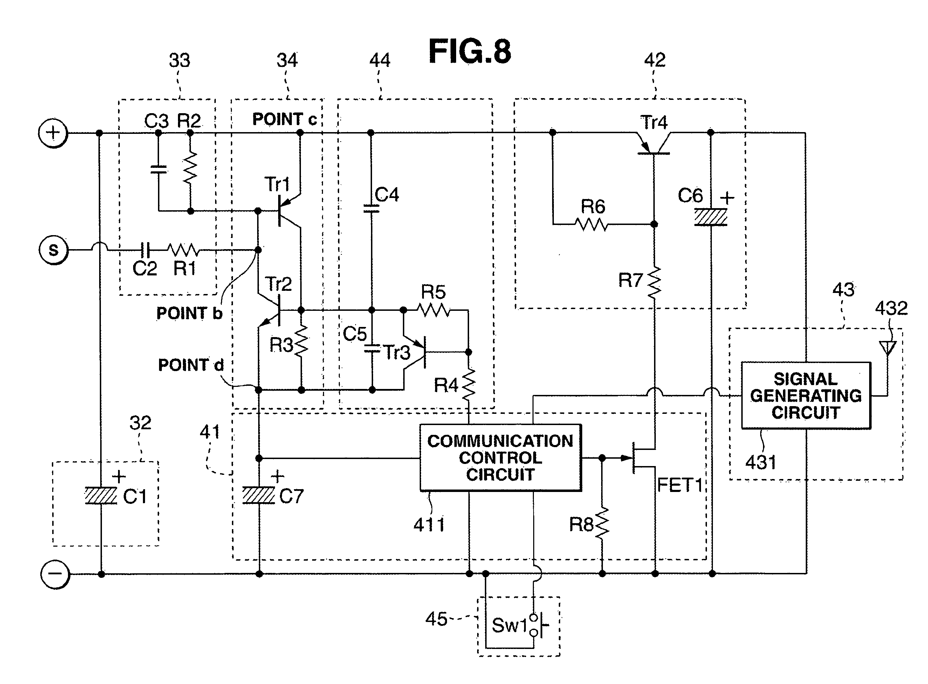

- Figs. 7 and 8: toghether show a circuit diagram of the embodiment (2).

### Detailed Description of Preferred Embodiments

Now, embodiments of a self-power generation type transmitter according to the present invention will be described with reference to the drawings.

The self-power generation type transmitter **1** according to the present invention comprises a power generating part **2** for generating an electric power by applying distortion to piezoelectric elements **21**, a charging part **3** for repeatedly charging generated power and a transmitting part **4** for transmitting a signal by the generated electric power. When an amount of charged power reaches a level at which a signal can be transmitted, the electric power is supplied to the transmitting part from the charging part.

The power generating part **2** includes the piezoelectric elements **21** and a colliding member **22**. When the colliding member **22** collides with the piezoelectric elements **21** to apply a distortion to the piezoelectric element and generate an electric power in the piezoelectric elements **21**.

The charging part **3** includes rectifying means **31**, charging means **32**, deciding means **33** and discharge switching means **34**.

The rectifying means **31** rectifies AC power outputted from the power generating part **2** to obtain a pulsating current.

The charging means **32** is a means for charging the pulsating current obtained by the rectifying means **31** as a direct current.

The deciding means **33** is a means for intermittently monitoring and deciding an amount of charged power of the charging means **32** in accordance with a timing of the power generation of the piezoelectric elements **21**. In this means, a small amount of charged power is consumed upon monitoring. However, since the amount of charged power is intermittently monitored, the consumption of the electric power due to a monitor is suppressed and an influence thereof on the amount of charge power is reduced.

The discharge switching means **34** is a means for starting the discharging operation of the charging means **32** and supplying an electric power to the transmitting part **4** of a post-stage when the deciding means **33** decides that the amount of charged power of the charging means **32** reaches a level at which a signal can be transmitted.

The transmitting part **4** includes communication control means **41**, signal switching means **42**, signal generating means **43** and discharge stopping means **44**.

The communication control means **41** is a means for carrying out an operation necessary for a communication. The communication control means **41** is started by supplying the electric power thereto from the charging part **3.** This means starts its operation to turn ON the signal switching means **42** and supply data for transmitting a signal to the signal generating means **43**.

The signal switching means **42** is turned ON by the communication control means 41 to supply the electric power to the signal generating means **43.**

The signal generating means **43** converts the data for transmitting a signal received from the communication control means **41** to a signal and transmits the signal from an antenna **432**.

The discharge stopping means **44** operates the discharge switching means **34** so as to stop the supply of electric power from the charging part **3.** The discharge stopping means **44** is operated by the communication control means **41** when the communication control means **41** completely supplies all the data necessary for transmitting a signal to the signal generating means **43**.

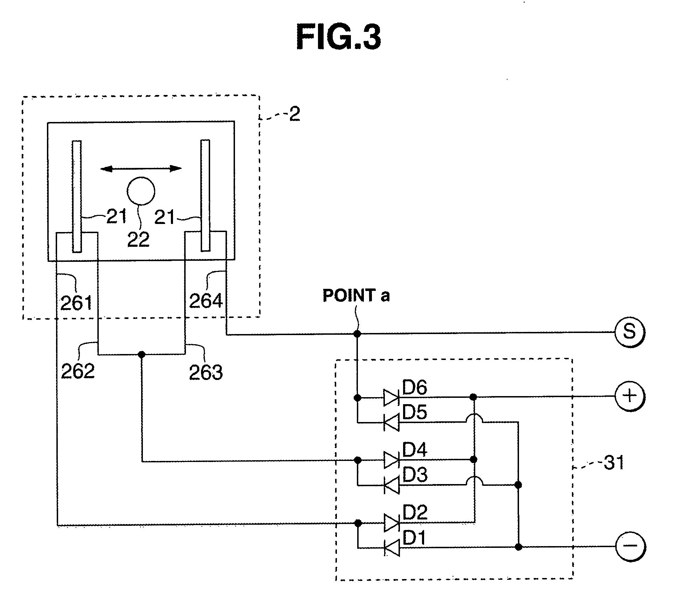

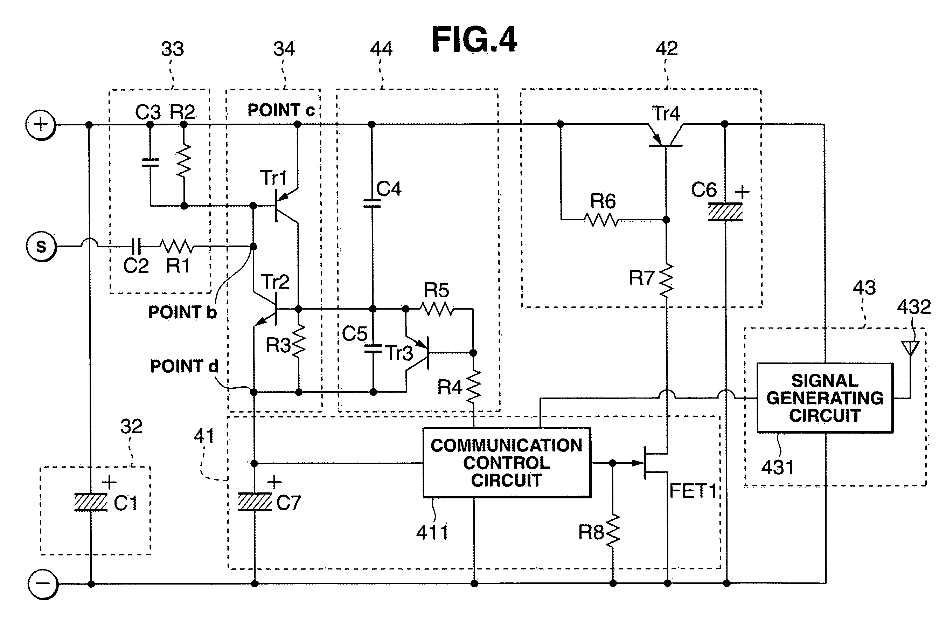

Now, the structure of each part will be described in detail by using Figs. 3 to 5. Figs. 3 and Fig. 4 show continuous circuit diagrams which are connected together by an S point, a + point and a - point.

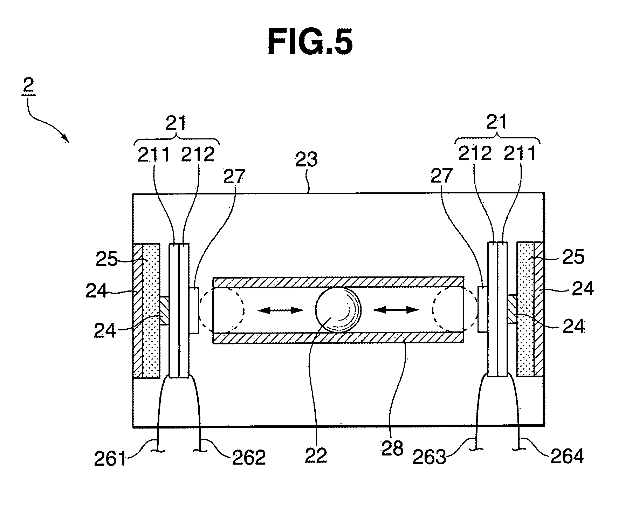

Initially, in the power generating part 2 as shown in detail in Fig. 5, the colliding member **22** rolling in a housing **23** is adapted to collide with the piezoelectric elements **21** respectively attached to opposed wall sides in the box type housing **23**. The colliding member **22** is made of a ball.

The piezoelectric element **21** is formed by connecting two PZT piezoelectric ceramic plates **211** and **212** together to have polarisations reverse to each other so that a power generating structure connected in series is obtained. Thus, a cancellation due to the polarisation is prevented and a power generation performance is improved.

Further, the piezoelectric element **21** is partly stuck only to a central part of a plate type cushion material **25** by an adhesive **24** (may use a fixing method except an adhesive method). The cushion material **25** is fixed to the housing by the adhesive **24**. Accordingly, the piezoelectric element **21** is protected from the impact of the collision of the colliding member 22 and the oscillation of the piezoelectric ceramic plates **211** and **212** is continued to improve the power generation performance.

Then, two film type electrodes (not shown) formed on the front and back surfaces of the piezoelectric elements **21**, lead wires **261** to **264** are respectively connected, and led by the rectifying means **31** of a post-stage. Further, on the surface (a surface with which the colliding member **22** collides) of each piezoelectric element **21**, a thin plate type protector **27** for protecting the piezoelectric element **21** from impact of the colliding member **22** is attached.

Further, between the opposed piezoelectric elements **21**, a guide **28** is provided for regulating the rolling direction of the colliding member **22** and guiding the colliding member **22** so as to precisely collide with a part to which the protector **27** of the piezoelectric element **21** is fixed. As the guide **28**, a cylindrical guide is shown, however, a partition plate may be used.

As the materials of respective parts, materials of lead zirconate titanium are firstly preferably used for the piezoelectric ceramic plates **211** and **212**, however, the materials are not limited thereto. The piezoelectric ceramic plates **211** and **212** are desirably made of materials hard as much as possible and having a higher Q value in order to continue the oscillation for a long time and more obtain power generation. Specifically, the Q value is preferably 1000 or higher and more preferably 2000 or higher.

As the material of the cushion material **25**, a synthetic resin material a rubber material or a soft material obtained by forming it in a sponge shape is preferable. Specifically, foaming polyethylene or the like is preferable.

As the material of the colliding member **22**, a material heavy enough not to break the piezoelectric elements **21** is good in its power generating efficiency. Specifically, tungsten, iron or the like is preferable.

Further, as the material of the protector **27**, hard metal, a synthetic resin, etc., is preferable. Specifically, phosphor bronze, stainless steel, etc. is preferable. Phosphor bronze good in its workability is conveniently used.

The structure of the power generating part **2** and the method for generating power of the piezoelectric elements **21** are not limited to the above-description. For example, the structure disclosed in the Japanese patent application Laid-Open No. 2001-145375 by the inventors of the present invention may be employed.

Further, to a piezoelectric element **21** of a single layer may be stuck a metal plate whose thickness is adjusted so as to balance an amount of distortion and deformation therebetween, and a colliding member **22** may be made to collide with the piezoelectric element from the metal plate side to generate power.

Further, a structure that the colliding member **22** is omitted and the both-side supported piezoelectric element **21** is pressed to generate electric power, a structure that a cantilever type piezoelectric element **21** is freely oscillated to generate an electric power or a structure that other distortion forms (wavy forms, etc.) are generated to generate an electric power may be used.

In the rectifying means **31**, as shown in Fig. 3, a full-wave rectification circuit is formed by diodes D1 to D6. The AC power outputted in the power generating part **2** is rectified in this circuit and outputted as a pulsating current to the post-stage. The lead wires **262** and **263** of the four lead wires 261 to 264 taken out from the power generating part **2** are connected together, and three lead wires are connected to six diodes D1 to D6. In this case, although the lead wires **262** and **263** are connected together to form a circuit in which the number of diodes is reduced, the lead wires **262** and **263** may not be connected together and the lead wires may be connected to eight diodes to form a full-wave rectification circuit.

The charging means **32** is provided with a capacitor C1. This capacitor may be replaced by a charging battery. The capacitor C1 is successively charged with the pulsating current rectified by the rectifying means **31** as a direct current. Voltage at both the ends of the capacitor C1 is raised every time the colliding member **22** repeatedly collides with the piezoelectric elements 21 to generate an electric power.

As the discharge switching means **34**, a self-hold type current switch is employed. In the embodiment (1), a complementary transistor is used and a PNP transistor Tr1 is combined with an NPN transistor Tr2. In the discharge switching means **34**, when voltage lower by about 0.6 V (a value determined by the Tr1) than the voltage of a point c is applied to a point b, the Tr1 is turned ON and the Tr2 is turned ON at the substantially same time. In such a manner, when the discharge switching means **34** is turned ON, a part between point c and a point d has an extremely low impedance. Then, the electric power stored in the capacitor C1 of the charging means **32** is charged and supplied to the communication control means **41** with an extremely low loss. This ON-state becomes a self-hold state and is continued until the discharging operation is stopped.

The deciding means **33** includes capacitors C2 and C3 and resistances R1 and R2. C3 is provided for preventing an erroneous operation. The capacitor C2 and the resistance R1 are provided between a point a as an output from the piezoelectric element **21** shown in Fig. 3 and point b of the discharge switching means **34** shown in Fig. 4.

The time for applying voltage to the point is determined upon deciding the amount of charged power in accordance with this time constant. At point a, the AC power is generated every time the colliding member **22** collides with the piezoelectric elements **21**. This voltage is a value obtained by adding the forward voltage of the diode D5 to the voltage at both the ends of the capacitor C1. As the voltage of the capacitor C1 is increased due to charging, the AC voltage of point a is also increased. In other words, at point a, the AC voltage substantially proportional to DC voltage at both the ends of the capacitor C1 is obtained every time the colliding member 22 collides with the piezoelectric elements **21**, that is, intermittently.

The AC voltage at point a is applied to point b for a very short time determined by the time constant of the resistance R1 and the capacitor C2. The voltage of point b is determined by the distribution ratio of the resistances R1 and R2. As described above, when the voltage of point b exceeds the value of voltage lower by about 0.6 V (the value determined by the Tr1) than the voltage of point c, the discharge switching means **34** is turned ON. In this case, since the voltage of point b is represented by "voltage of a point c x **(1 - R2 / (R1 + R2))**", the moment when the voltage of point b is equal to the voltage lower by about 0.6 V than the voltage of point c "the voltage of point c - about 0.6 V" indicates a threshold value for decision and the level of an amount of charged power is decided based on it.

Therefore, R1 and R2 are adjusted so that an amount of charged power for starting the discharging operation can be adjusted to a level at which a signal can be transmitted. This level is arbitrarily set in accordance with the signal to be transmitted. Here, although point a is provided in the lead wire **264** side, point a may be provided in the lead wire **261** side or the side of the connected lead wires **262** and **263**.

Further, although a decision for transmitting a signal is carried out every time one piezoelectric element **21** of the two piezoelectric elements **21** generates an electric power, the decision for transmitting a signal may be carried out at a timing when both the piezoelectric elements **21** generate electric power, or a decision may be carried out at intervals of n times (n is an arbitrary number) of timings when the piezoelectric elements **21** generate electric power.

The communication control means **41** includes a communication control circuit **411,** a capacitor C7, a resistance R8 and an FET1. The capacitor C7 is provided for stabilising an operation. The resistance R8 and the FET1 are provided as a level conversion for interfacing the communication control circuit **411** and the signal switching means **42** with a low consumed power. When the electric power is supplied to the communication control circuit **411** by the discharge from the charging part **3**, a procedure necessary for transmitting a signal is executed in the communication control circuit **411**. The communication control circuit **411** is low in its consumed power.

The signal switching means **42** includes a PNP transistor Tr4, resistances R6 and R7, and a capacitor C6. Since a signal generating circuit **431** needs a relatively large power, the signal switching means **42** employs the transistor switch Tr4 for large power to supply the electric power to the signal generating circuit **431**. In the signal switching means **42**, when a command for starting the transmission of a signal from the communication control circuit **411** turns the transistor Tr4 ON through the FET1 and the resistance R7, the signal generating means **43** operates to start the transmission of a signal.

The signal generating means **43** includes the signal generating circuit **431** and an antenna **432**. When the electric power is supplied from the signal switching means **42**, the signal generating means **42** converts the data for transmitting a signal received from the communication control circuit **411** into a radio signal and transmits it from the antenna **432**. Here, although the radio signal is exemplified, other signals such as a ultrasonic wave signal, an acoustic signal, an infrared ray signal, an optical signal, etc. may be transmitted.

The discharge stopping means **44** includes a PNP transistor Tr3, resistances R4 and R5, and capacitors C4 and C5. The capacitors C4 and C5 are provided for preventing an erroneous operation. In this means, when the communication control circuit **411** completely transmits the data necessary for transmitting a signal to the signal generating circuit **431**, a signal for turning the transistor Tr3 ON is outputted through the resistance R4 from the communication control circuit **411**. When the transistor Tr3 is turned ON, the self-hold state of the discharge switching means **34** is released to stop the discharging operation of the electric power store in the capacitor C1 and finish a power generating operation.

The operation of the self-power generation type transmitter **1** of the embodiment (1) constructed as mentioned above will be described below. Initially, when the generating part **2** receives an oscillation or the like, the colliding member **22** collides with the piezoelectric elements **21** and the piezoelectric elements **21** receive a distortion to oscillate so that AC power is generated. Since the opposed piezoelectric elements **21** and **21** are provided in the power generating part **2**, the electric power is efficiently generated by an oscillation for once. This AC power is rectified in the rectifying means **31** of the charging part **3** to have a pulsating current. The charging means **32** is charged with the pulsating current as a DC current. Then, an amount of charged power of the charging means **32** is gradually increased by repeating the collision of the colliding member **22** with the piezoelectric elements **21**.

Every time the colliding member **22** collides with one piezoelectric element **21**, the AC power is intermittently generated at point a. As the amount of charged power of the charging means **32** is increased, the voltage of point a is also increased. Every time the AC voltage is generated at point a, the voltage is applied to point b only for a very short time determined by the time constant of the capacitor C2 and the resistance R1 of the deciding means **33**. When the voltage applied to point b becomes a prescribed value or more, the discharge switching means **34** is turned ON to have a self-hold state, so that the electric power with which the charging means **32** is charged is discharged and supplied to the communication control means **41** of the transmitting part 4 at a stroke.

In the communication control means **41**, the communication control circuit **411** to which the electric power is supplied supplies the data for transmitting a signal to the signal generating means **43** and operates the signal switching means **42** to supply the electric power to the signal generating means **43**. Thus, the signal generating circuit **431** converts the data for transmitting a signal into a radio signal and transmits it from the antenna **432**. On the other hand, when the communication control circuit **411** completely transmits the data for transmitting a signal to the signal generating circuit **431**, it turns OFF the signal switching means **42** to stop the supply of the electric power to the signal generating circuit **431**. Further, the discharge stopping means **44** is operated to stop the discharging operation by the discharge switching means **34**. Thus, in the charging means **32**, a charging operation is started again.

As described above, in the self-power generation type transmitter 1 of the embodiment (1), since the electric power generated in the piezoelectric elements **21** is repeatedly accumulated in the charging means **32** and the discharge switching means **34** does not start a discharging operation to a level at which a signal can be transmitted, the electric power does not need to be violently generated for a short period. Therefore, the charging operation can be achieved not only by artificially generating an electric power, but also by generating an electric power using a natural force or the like.

Then, every time the piezoelectric elements **21** generate the electric power, the AC voltage is taken out from the output thereof to decide an amount of charged power by using it for the deciding mean **33.** Since the above-described intermittent monitor and decision for the amount of charged power are carried out at a timing when the amount of charged power is increased, a decision efficiency is good.

In addition, wasteful consumption of electric power for deciding the transmission of a signal is greatly suppressed, the amount of charged power in the charging means **32** can be increased and the large electric power can be supplied to the transmitting part **4**. Further, when the signal is completely transmitted, the discharge from the charging means **32** is stopped, so that an amount of power necessary only for a series of operations for transmitting a signal is consumed and the consumption of the charged power after the transmission is prevented.

Accordingly, since the amount of charged power can be increased and the electric power can be efficiently supplied for transmitting a signal even by using the piezoelectric elements **21** having a small amount of power generation, the self-power generation type transmitter of the present invention can be applied not only to a transmission to a near place as described in the prior art, but also to a transmission to a remote plate for communication or a transmission with a large quantity of information as a transmission which requires a relatively high electric power.

In the embodiment (1), although the AC power generated at point a is used for the deciding means **33** of the self-power generation type transmitter 1, dummy AC power having voltage corresponding to the amount of charged power of the charging means **32** may be generated in place of it and this dummy AC power may be used for decision.

As one example, a mechanical switch movable integrally with the power generating part **2** is provided in the charging part **3**. One part of the mechanical switch is connected to the positive side of the capacitor C1 of the charging means **32** and the other part of the mechanical switch is connected to the capacitor C2 of the deciding means **33**. The mechanical switch is turned ON and OFF every time the power generating part **2** oscillates and voltage at both the ends of the capacitor C1 of the charging means **32** is intermittently applied to the capacitor C2 as dummy AC voltage in accordance with the ON and OFF operation. Then, the voltage is applied to point b for a very short time determined by the time constant of the capacitor C2 and the resistance R1. Then, when the voltage applied to point b becomes prescribed voltage or higher, the discharge switching means **34** operates to discharge the power of the charging means **32**. In this connection, the dummy AC power may be generated by other methods.

Now, an embodiment (2) of the present invention will be described below.

A self-power generation type transmitter **1** of the embodiment (2) is characterised in that a transmitting part **4** transmits a signal at a timing when the transmitting part **4** receives an instruction for transmitting a signal. To the communication control means **41** of the transmitting part 4, an instructing means **45** for instructing a timing for transmitting a signal is connected. The instructing means **45** is provided with a switch Sw1. This switch Sw1 designates a switch turned ON by pressure, temperature or an external signal, or a push-button switch operated by a human being. To the communication control means **41**, an instruction for transmitting a signal is supplied thereby. Even while the communication control means **41** receives the supply of electric power from a charging part 3, the communication control means **41** does not operate to transmit a signal until it receives the instruction from the instructing means **45**.

With such a construction, since the self-power generation type transmitter **1** of the embodiment (2) does not immediately transmit a signal when an amount of charged power in the charging part 3 reaches a level at which the signal can be transmitted and an electric power is supplied to the transmitting part **4**, but it transmits a signal in accordance with the instructing means **45** after the electric power is supplied, the timing of transmission can be controlled. Other operations and effects are the same as those of the embodiment (1).

### Industrial Applicability

As specifically described above, the self-power generation type transmitter according to the present invention is a transmitter using the power generation of the piezoelectric elements as a power source, in which repeatedly generated electric power is charged and an electric power is supplied to the transmitting part after the amount of charged power increases to a level at which a signal can be transmitted. Therefore, the generated power can be employed without wastefulness.

Further, since the amount of charged power is decided and efficiently monitored in accordance with the timing of power generation of the piezoelectric elements, the electric power is not wastefully consumed for decision, and while the amount of charged power is monitored, its level can be improved. Thus, the transmission of a signal which requires a relatively high electric power or the transmission of a signal to a remote place can be performed. As a transmitter in which a battery does not need to be replaced by another battery or a charging operation is not required, the transmitter excellent in its utility and profitability and high in its performance can be provided.

## Claims

1. A self-power generation type transmitter comprising:
a power generating part (**2**) for generating power by applying distortion to piezoelectric elements (**21**),
a charging part (**3**) for repeatedly charging generated power and
a transmitting part (**4**) for transmitting a signal by the charged power,
wherein when the charged power reaches a level at which the signal can be transmitted, the electric power is supplied to the transmitting part (**4**) from the charging part (**3**).

2. The transmitter of claim 1, wherein the charging part (3) is provided with deciding means (**33**) for deciding whether or not the amount of charged power reaches the level at which the signal can be transmitted.

3. The transmitter of claim 2, wherein the deciding means (**33**) of the charging part (**3**) decides the amount of charged electric in accordance with a timing of the power generation of the piezoelectric elements (**21**).

4. The transmitter of claim 2 or 3, wherein the charging part (**3**) includes discharge switching means (34) for starting a discharging operation when it is decided that the amount of charged power is at the level where the signal can be transmitted, and stopping a discharging operation when the transmitting part (**4**) completes the transmission of the signal.

5. The transmitter of any one of claims 2 to 4, wherein the power generating part (**2**) includes the piezoelectric elements (**21**) and a colliding member (**22**) which collides with the piezoelectric elements (**21**), and the deciding means (**33**) decides the amount of charged power in accordance with the timing at which the colliding member (**22**) collides with the piezoelectric elements (**21**) to generate the power.

6. The transmitter of any preceding claim, wherein the transmitting part (**4**) does not transmit a signal until the transmitting part (**4**) receives an instruction for transmitting a signal after the electric power is supplied to the transmitting part (**4**) from the charging part (**3**).
